Europäisches Patentamt

**European Patent Office**

**Office européen des brevets**

(11) Publication number: **0 132 378**

**B1**

# EUROPEAN PATENT SPECIFICATION

(45) Date of publication of patent specification: **31.01.90**

(51) Int. Cl.⁵: **G 01 S 13/42**

(21) Application number: **84304904.0**

(22) Date of filing: **18.07.84**

(54) **Multiple beam scanning radar system.**

(30) Priority: **21.07.83 JP 133343/83**

(43) Date of publication of application:
**30.01.85 Bulletin 85/05**

(45) Publication of the grant of the patent:
**31.01.90 Bulletin 90/05**

(84) Designated Contracting States:
**DE FR GB**

(56) References cited:

**IEEE TRANSACTIONS ON AEROSPACE &
ELECTRONIC SYSTEMS, vol. AES-16, no. 5,
September 1980, pages 626-638, IEEE, New
York, US; G. PFISTER: "The series 320 radar:
three-dimensional air surveillance for the 1980s"**

**ELECTRO/76 PROFESSIONAL PROGRAM, no.
1976, 1976, pages 25-2,1-19, New York, US; P.J.
KAHRILAS: "Phased array radar trends"**

(73) Proprietor: **NEC CORPORATION
33-1, Shiba 5-chome, Minato-ku
Tokyo 108 (JP)**

(72) Inventor: **Izutani, Toshiyuki c/o NEC
Corporation
33-1, Shiba 5-chome Minato-ku
Tokyo (JP)**
Inventor: **Tomita, Yuichi c/o NEC Corporation
33-1, Shiba 5-chome Minato-ku
Tokyo (JP)**

(74) Representative: **Pears, David Ashley et al
REDDIE & GROSE 16 Theobalds Road
London WC1X 8PL (GB)**

(56) References cited:

**PROCEEDINGS OF THE IEE, vol. 125, no. 11R,
November 1978, pages 1100-1111, New York,
US; M.F. RADFORD: "Electronically scanned
antenna systems"**

Courier Press, Leamington Spa, England.

## Description

This invention relates to a multiple beam scanning radar system of the kind set forth in the introductory part of claim 1.

In a radar such as a three dimension radar requiring accurate information on range, azimuth and altitude of a target, the accuracy of azimuthal and altitude information depends greatly on antenna characteristics. Therefore, an antenna forming a pencil beam with a narrow directional pattern is suitable for such radars. Radar systems rotating the antenna at high speed to scan a region of space by a pencil beam have been employed extensively. However, a pencil beam scanning system requires a comparatively long time to scan the whole region, which can restrict the update rate (radar data rate) of target information.

A multiple beam scanning system has accordingly been employed as an effective means to avoid the above-mentioned restriction. The scanning system forms multiple beams by radiating multiple high-frequency pulse signals different in frequency simultaneously from an antenna to increase the update rate of information effectively.

In a conventional radar employing this system, each beam has a separate transmitter consisting of an exciter for generating a high-frequency signal of a predetermined frequency and an amplifier for amplifying the high-frequency signal. Each amplifier output is supplied to a predetermined feed terminal of the antenna through a duplexing circulator. The frequency of the signal supplied to, each feed terminal is predetermined and the number of the feed terminals is equal to the number of the beams to be formed. A plurality of corresponding beams are formed by the antenna according to the high-frequency signals thus supplied. On the other hand, the output signals provided at the feed terminals of the antenna in response to radar returns to the antenna are separated from the transmitting side by the circulators and are then fed to corresponding receivers, where only the respective frequency components for each transmitter system are extracted, amplified and then detected. A signal processor receives the plurality of frequency components thus obtained and performs normal radar signal processing necessary for target acquisition and display. See "Phased Array Radar Trends" Peter. J. Kalinilas, ELECTRO/76 Professional Program, 1976, pages 25.2, 1 to 19.

The above-described conventional multiple beam scanning radar system requires as many transmitters as there are beams to be formed; therefore not only does the configuration become complicated but there is also a serious cost disadvantage.

A multiple-beam scanning radar system using a single exciter to generate different frequencies sequentially has been described in IEEE Trans. AES-16, No. 5, September 1980, pages 626—38, but the complexity and cost of the system is still considerable. The antenna has a single port to which, on the receiver side, a complex filter arrangement is connected.

The principal object of this invention is to provide a radar system capable of forming mutiple beams through a simple configuration.

Another object of this invention is to provide a radar system capable of forming multiple beams and scanning the beams thus formed in one dimension.

According to this invention, there is provided a radar system with the features set out in claim 1 below.

According to this invention, a radar system simple in configuration which is capable of scanning the plural beams is obtainable by an arrangement wherein outputs from the exciter are distributed to a plurality of antenna units, each with its transfer switch and antenna. A phase shifter for one-dimensional scanning is provided on each antenna unit, which is properly controlled, or the plurality of antenna units are rotated mechanically without providing the phase shifter.

The invention will be described in more detail, by way of example, with reference to the accompanying drawings, in which:

Fig. 1 is a basic block diagram of a radar system according to this invention,

Fig. 2 is a performance timing chart for the system of Fig. 1,

Fig. 3 is a drawing representing beams obtainable in the radar system shown in Fig. 1,

Fig. 4 is a drawing representing one example of an antenna usable in this invention,

Figs. 5A and 5B are drawings representing one example of a transfer switch usable in this invention and its performance timing respectively,

Fig. 6 is a block diagram of another embodiment of this invention,

Figs. 7A and 7B are drawings representing a preferred example of a circuit for the transfer switch given in the embodiment in Fig. 6 and its performance timing respectively.

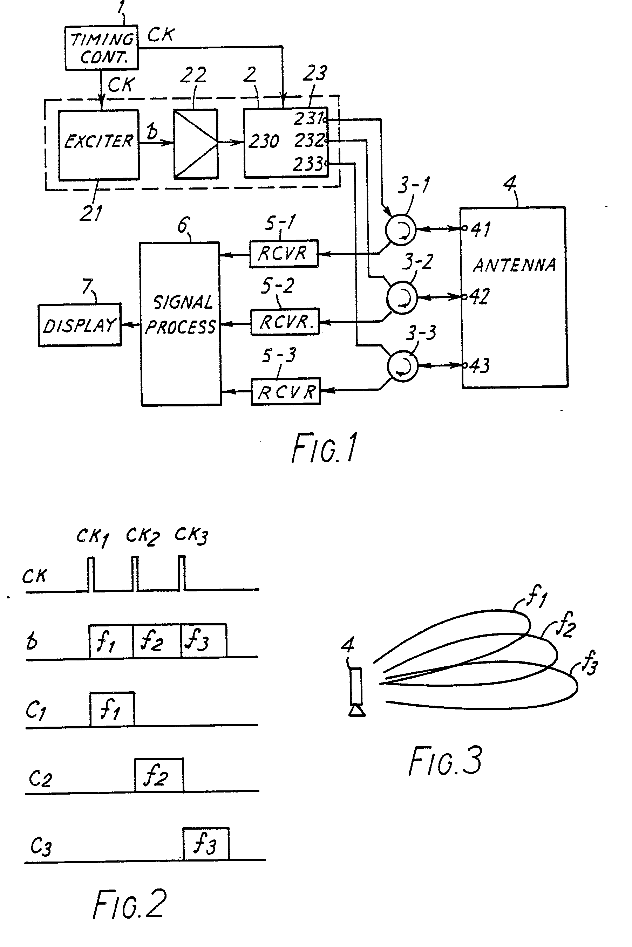

Referring to Fig. 1 and Fig. 2, a clock signal CK is generated from a timing controller 1 with a predetermined period. A transmitter 2 is constituted by an exciter 21, an amplifier 22 and a transfer or distributor switch 23. The exciter 21 outputs high-frequency pulse signals of three predetermined frequencies in cyclic sequence in response to the clock pulses from the timing controller 1. Specifically, a high-frequency signal of frequency $f_1$ is generated as shown in Fig. 2b in response to a clock pulse CK, and high-frequency signals of frequencies $f_2$ and $f_3$ are generated in response to clock pulses $CK_2$ and $CK_3$ in sequence and in time series. The signals generated in time series are amplified on the amplifier 22 and then supplied to an input terminal 230 of the transfer switch 23. The transfer switch 23 outputs signals shown in Fig. 2 $C_1$, $C_2$ and $C_3$ through output terminals 231, 232 and 233 in response to the clock pulses $CK_1$, $CK_2$ and $CK_3$. The high-fre-

quency signals $C_1$, $C_2$ and $C_3$ are input to corresponding feed terminals 41, 42, 43, three beams, namely those of frequencies $f_1$, $f_2$ and $f_3$, are formed from the antenna 4 at different elevations as shown in Fig. 3. As is well known, for example, a reflector antenna with multiple primary feeds, Blass matrix arrays and Butler matrix arrays (R. C. Hansen, "Microwave Scanning Antennas", Vol III, p. 247 to p. 263. Academic Press, 1966) and further Rotman lens arrays (W. Rotman, "Wide-Angle Microwave Lens for Line Source Applications". IEEE Trans. AP, p. 623 to p. 632, Nov. 1963) can be employed for the configuration wherein a separate radiant beam will be formed for each feed terminal of the antenna.

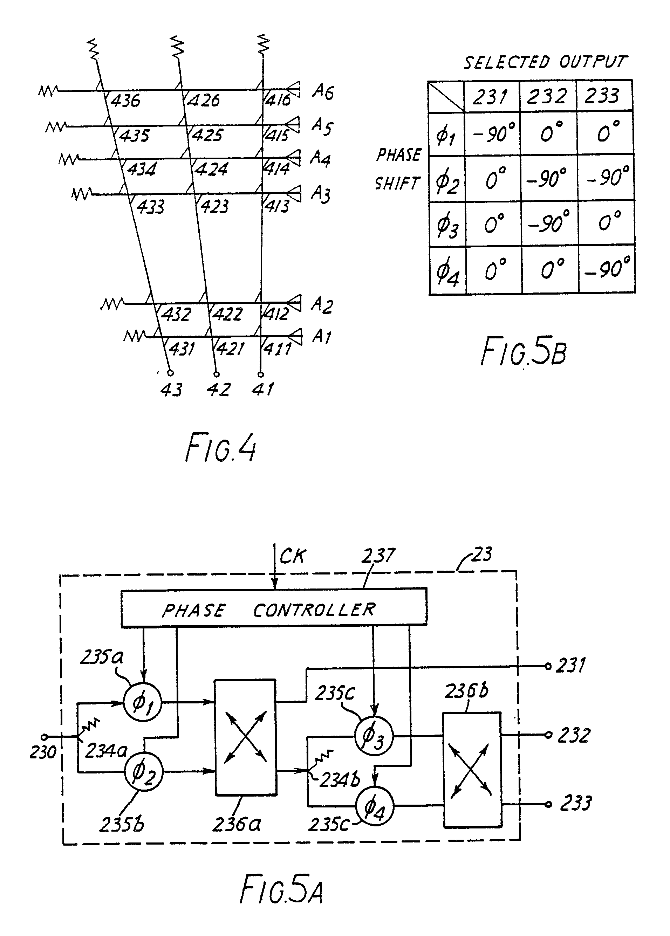

Fig. 4 represents a Blass matrix array which is an example of the antenna usable in this invention, wherein feed terminals 41, 42, and 43 are coupled with antenna elements $A_1$ to $A_6$ through couplers 411 to 416, 421 to 426 and 431 to 436, the high-frequency signals of frequencies $f_1$, $f_2$, and $f_3$ are inputted in time series to the feed terminals 41, 42 and 43 and sent in sequence from the antenna elements $A_1$ to $A_6$. Each feed line and each antenna element is terminated with a resistive terminator.

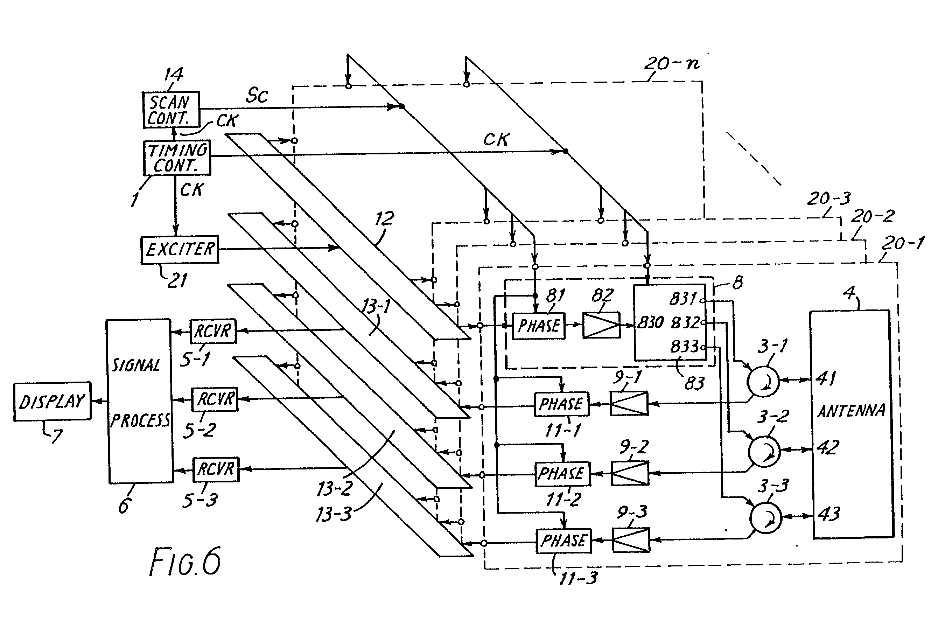

An example wherein a waveguide ferrite switch suitable for switching a high power is employed for the transfer switch 23 and its performance timing are represented in Figs. 5A and 5B respectively. In response to a timing signal CK from the timing controller 1, a phase shifting control circuit 237 sets a shift rate of 90° ferrite phase shifters 235a to 235d at either −90° or 0°. The high-frequency signals supplied to the input terminal 230 are branched into two by a waveguide magic T 234a and thus input to the phase shifters 235a and 235b. Outputs of the phase shifts 235a, 235b are supplied to a known 90° waveguide 3 dB coupler 236a, and one output of the coupler 236a is supplied to the output terminal 231. On the other hand, another output of the coupler 236a is branched into two by a waveguide magic T 234b and supplied to the 90° ferrite phase shifters 235c and 235d. Further, each output of the phase shifters 235c and 235d is input to a 90° waveguide 3 dB coupler 236b, and two outputs of the coupler 236b are supplied to the output terminals 232 and 233. In such a configuration, for supply of the high-frequency signal to the output terminal 231, a phase change will be set at −90° only in the phase shifter 235a and that on the other phase shifters can be set at 0°. For supply of the high-frequency signal to the output terminal 232, the phase shift will be set at −90° in the phase shifters 235b and 235c, and that in the other phase shifters can be set at 0°. Further for output of the high-frequency signal to the output terminal 233, the phase shift in the phase shifters 235b and 235d will be set at −90°, and that in the other phase shifters can be set at 0°. The relations between set phase shifts in the phase shifters and selected output terminals are tabulated in Fig. 5B.

As described above, according to this embodiment, beams of different frequencies can be formed almost simultaneously by only one transmitter. Strictly speaking, however, beams of each frequency are formed of cyclic time sequence as described, but since the interval of occurrence is extremely short, they can be regarded as almost simultaneous. The antenna 4 can be mechanically rotated in azimuth.

At the time of reception, on the other hand, reflected signals from a target are received simultaneously by the above-mentioned beams, sent to receivers 5-1, 5-2 and 5-3 by way of the circulators 3-1, 3-2 and 3-3 respectively, where radar signals of each frequency component are separated, amplified, detected and then sent to a signal processor 6. A predetermined radar signal processing is carried out in the signal processor 6, and a signal thus obtained is supplied to a display 7 therefor.

Fig. 6 represents another embodiment of this invention, which relates to a phase array radar for scanning three beams formed in the vertical plane electronically in the horizontal plane. In this embodiment, there is a horizontal array of n antenna units 20-1 to 20-n, each provided with a transmitting system and a receiving system with a phase shifter for horizontal scanning added to the transmitting system and the receiving system basically shown in Fig. 1. The phasing quantities of the phase shifters of the antenna units are changed according to a scanning signal Sc from a beam scanning controller 14.

The high-frequency pulse signals of frequencies $f_1$, $f_2$ and $f_3$, for example, are sent to a power distributor 12 from the exciter 21 in response to the timing signal (clock signal) CK from the timing controller 1 as in the case of the embodiment given in Fig. 1. A power distributor 12 distributes the high-frequency pulse signals from the exciter 21 to the antenna units 20-1 to 20-n. A distributed signal is sent to a phase shifter 81 of the antenna unit 20-1, for example. Upon receipt of the signal CK from the timing controller 1, the beam scanning controller 14 sends a scanning control signal Sc to the phase shifter (81, for example) of each antenna unit for horizontal. The phase shifter then applies a phase shift processing determined by the scanning control signal Sc for beam horizontal scanning to the distributed signal and supplies the processed signal to an amplifier 82. The signal amplified by the amplifier 82 is input to an input terminal 830 of a switch 83. The transfer switch 83 operates like the switch 23 in Fig. 1 in response to the clock signal CK and outputs the high-frequency pulse signals of frequencies $f_1$, $f_2$ and $f_3$ in time series from output terminals 831, 832 and 833. The signals $f_1$, $f_2$ and $f_3$ are supplied to the feed terminals 41, 42 and 43 of the antenna 4 by way of the circulators 3-1, 3-2 and 3-3, and thus three vertically displaced beams are formed as in the case of Fig. 3.

On the other hand, signals received by the antenna 4 are amplified amplifiers 9-1 to 9-3 by way of the circulators 3-1 to 3-3, input then to phase shifters 11-1 to 11-3, and subjected to a phase shift as in the case of transmission. The phasing quantity varies according to differences in the characteristics of the power distributor 12 and power combiners 13-1 to 13-3 and also according to weighting in the power combiners 13-1 to 13-3. However, in a simple case the phase shift varies by a constant increment from unit to unit and the size of the increment determines the azimuth of the antenna array. Outputs of the phase shifts 11-1 to 11-3 are supplied to power combiners 13-1 to 13-3, one for each beam. The power combines 13-1 to 13-3 combine received signals from the antenna units 20-1 to 20-n which correspond to each beam and send them to the receivers 5-1 to 5-3. The receivers 5-1 to 5-3, the signal processor 6 and the display 7 are the same as in the embodiment of Fig. 1.

The above embodiment utilizes the phase shifters 81 and 11-1 to 11-3 in the transmitting system and the receiving system of the antenna units 20-1 to 20-n and controls these phase shifters by the control signal Sc from the beam scanning controller 14, thereby scanning three pencil beams formed in the vertical plane electronically in the horizontal plane.

In this embodiment, the three beams can be formed in one transmitting system, which may be advantageous both in structure and cost as compared with a conventional system. A waveguide ferrite switch is used for the transfer switch 23 in the embodiment shown in Fig. 1 so as to cope with the high power which has to be handled. However, in Fig. 6, the necessary power is obtained through a spatial synthesis of outputs of the n units 20-1 to 20-n. Therefore the necessary power per unit is lessened to 1/n as compared with the embodiment of Fig. 1. Accordingly in this embodiment, a miniature, lightweight and cheap device like a PIN diode switch, for example, can be used for the transfer switch 83.

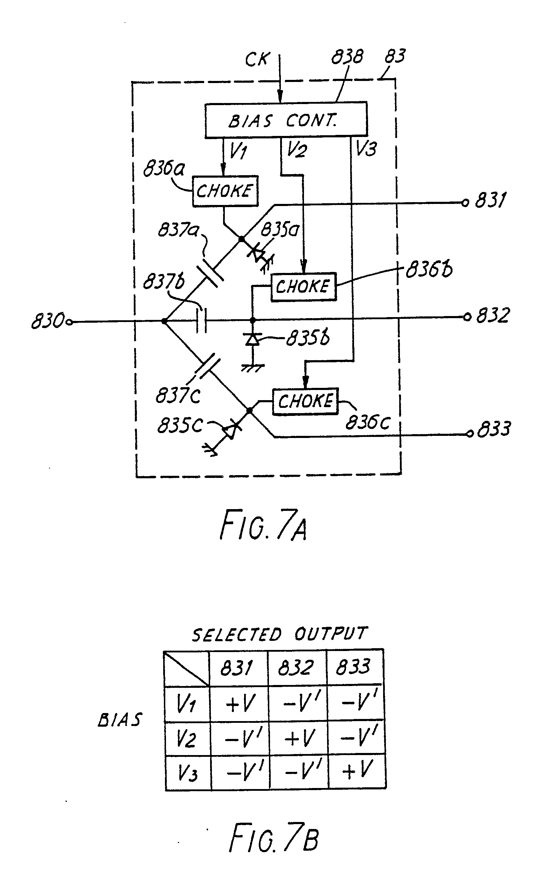

Figs. 7A and 7B represent an example of the transfer switch utilizing PIN diodes and its performance timing respectively. The input terminal 830 is branched into three, DC blocking capacitors 837a, 837b, 837c are connected in series in the branch lines, which are connected to the output terminals 831, 832, 833 respectively, and to PIN diodes 835a, 835b, 835c which are connected to ground. In response to timing signals, a voltage setting circuit 838 supplies signals $V_1$, $V_2$, $V_3$, for example, a DC voltage $+V$ or $-V'$ different in polarity to the diodes 835a, 835b, 835c by way of high frequency blocking chokes 836a, 836b, 836c, thereby controlling the connection between each branch line and output terminal. The relation between the selected output terminals for the high-frequency signal and the DC voltages supplied to the diodes is given in Fig. 7B.

It is apparent that the phase shifters 81, 11-1 to 11-3 and the beam scanning control circuit 14 can be omitted, and the antenna units 20-1 to 20-n can be rotated mechanically.

## Claims

1. A radar system comprising at the transmitting side a timing controller (1) generating a timing signal (CK) with a predetermined period, an exciter (21) responsive to the timing signal to generate a plurality of distinguishable high-frequency signals ($f_1$, $f_2$, $f_3$) and an antenna (4) having a plurality of terminals (41, 42, 43) receiving the high frequency signals respectively and forming a corresponding plurality of beams, and comprising at the receiving side receiver means (5-1 to 5-3) for receiving reflected signals from targets, and signal processing means (6) for performing predetermined radar signal processing on the received signals, characterized in that the exciter (21) generates the high-frequency signals ($f_1$, $f_2$, $f_3$) in sequence and by a transfer switch (23, 83) which distributes these signals to respective ones of the antenna terminals (41, 42, 43) and in that the receiver means (5-1 to 5-3) are arranged for simultaneously receiving in separate channels the respective different frequency signals from the antenna terminals (41, 42, 43), these signals corresponding to the plurality of beams.

2. A radar system according to claim 1, characterized in that the high frequency signals ($f_1$, $f_2$, $f_3$) have different frequencies.

3. A radar system according to claim 1 or 2, characterized in that the transfer switch (23) is a waveguide ferrite switch.

4. A radar system according to claim 1 or 2, characterized by a plurality of antenna units (20-1 to 20-n), each with a transfer switch (83) and antenna (4), a distributor (12) for distributing power from the exciter (21) to the units, and a plurality of combiners (13-1 to 13-3) for combining received signals corresponding to the different feed terminals (41, 42, 43) of the antennae (4) in the antenna units.

5. A radar system according to claim 4, characterized in that the transfer switches (83) are PIN diode switches.

6. A radar system according to claim 4 or 5, characterized in that each antenna unit (20-1 to 20-n) includes a phase shifter (81) preceding the transfer switch (83), and second phase shifters (11-1 to 11-3) preceding the power combiners (13-1 to 13-3), and by a beam scanning controller (14) arranged to control the first and second phase shifters so as to scan electronically the plurality of beams of the array of antenna units.

7. A radar system according to claim 4 or 5, characterized by means for rotating the array of antenna units (20-1 to 20-n) to scan mechanically the plurality of beams thereof.

## Patentansprüche

1. Radarsystem, das an der Sendeseite eine Zeitsteuerung (1), die ein Zeitsignal (CK) mit einer bestimmten Periode erzeugt, einen Erreger (21), der auf das Zeitsignal anspricht, so daß mehrere unterscheidbare Hochfrequenzsignale ($f_1$, $f_2$, $f_3$) erzeugt werden, und eine Antenne (4) mit mehreren Anschlüssen (41, 42, 43) aufweist, die die jeweiligen Hochfrequenzsignale empfängt und eine entsprechende Anzahl von Strahlenbündeln bildet, und das an der Empfangsseite Empfängereinrichtungen (5-1 bis 5-3) zum Empfangen von an Objekten reflektierten Signalen und eine Signalverarbeitungseinrichtung (6) aufweist, zum Durchführen einer bestimmten Radarsignal-Verarbeitung der empfangenen Signale, dadurch gekennzeichnet, daß der Erreger (21) die Hochfrequenzsignale $(f_1, f_2, f_3)$ in Folge erzeugt und durch einen Übertragungsschalter (23, 83), der diese Signale an die entsprechenden der Antennenanschlüsse (41, 42, 43) verteilt, und daß die Empfangseinrichtungen (5-1 bis 5-3) zum gleichzeitigen Empfangen der zugehörigen verschiedenen Frequenzsignale von den Antennenanschlüssen (41, 42, 43) in getrennten Kanälen angeordnet sind, wobei diese Signale den mehreren Strahlenbündeln entsprechen.

2. Radarsystem nach Anspruch 1, dadurch gekennzeichnet, daß die Hochfrequenzsignale $(f_1, f_2, f_3)$ verschiedene Frequenzen haben.

3. Radarsystem nach Anspruch 1 oder 2, dadurch gekennzeichnet, daß der Übertragungsschalter (23) ein Wellenleiter-Ferritschalter ist.

4. Radarsystem nach Anspruch 1 oder 2, gekennzeichnet durch mehrere Antenneneinrichtungen (20-1 bis 20-n), von denen jede einen Übertragungsschalter (83) und eine Antenne (4) aufweist, einen Verteiler (12), zum Verteilen von Leistung von dem Erreger (21) an die Einrichtungen, und durch mehrere Kombinationseinrichtungen (13-1 bis 13-3) zum Kombinieren von empfangenen Signalen, die den verschiedenen Zufuhranschlüssen (41, 42, 43) der Antennen (4) in den Antenneneinrichtungen entsprechen.

5. Radarsystem nach Anspruch 4, dadurch gekennzeichnet, daß die Übertragungsschalter (83) PIN-Diodenschalter sind.

6. Radarsystem nach Anspruch 4 oder 5, dadurch gekennzeichnet, daß jede Antenneneinrichtung (20-1 bis 20-n) einen vor dem Übertragungsschalter (83) angeordneten Phasenschieber (81) und vor den Leistung-Kombinationseinrichtungen (13-1 bis 13-3) angeordnete zweite Phasenschieber (11-1 bis 11-3) aufweist und durch eine Strahlenbündel-Abtast-Regelung (14), die zum Steuern der ersten und zweiten Phasenschieber angeordnet ist, so daß die mehreren Strahlenbündel der Antenneneinrichtungen-Reihe elektronisch abgetastet werden.

7. Radarsystem nach Anspruch 4 oder 5, gekennzeichnet durch Einrichtungen zum Drehen der Antenneneinrichtungen-Reihe (20-1 bis 20-n), so daß deren mehrere Strahlenbündel mechanisch abgetastet werden.

**Revendications**

1. Système de radar comprenant au côté d'émission un contrôleur de synchronisation (1) produisant un signal de synchronisation (CK) avec une période prédéterminée, un excitateur (21) répondant au signal de synchronisation pour produire une multitude de signaux de haute fréquence pouvant être distingués $(f_1, f_2, f_3)$ et une antenne (4) ayant une multitude de bornes (41, 42, 43) recevant les signaux de haute fréquence respectivement et formant une multitude correspondante de faisceaux, et comprenant au côté de réception des moyens de réception (5-1 à 5-3) pour recevoir des signaux réfléchis par des cibles, et un moyen (6) de traitement du signal pour exécuter un traitement prédéterminé des signaux radar sur les signaux reçus, caractérisé en ce que l'excitateur (21) produit les signaux de haute fréquence $(f_1, f_2, f_3)$ à la suite et par un commutateur de transfert (23, 83) qui répartit ces signaux parmi des bornes respectives (41, 42, 43) de l'antenne, et en ce que les moyens de récepteur (5-1 à 5-3) sont disposés pour recevoir simultanément dans des canaux séparés les signaux respectifs de fréquence différente provenant des bornes (41, 42, 43) de l'antenne, ces signaux correspondant à la multitude de faisceaux.

2. Système de radar selon la revendication 1, caractérisé en ce que les signaux de haute fréquence $(f_1, f_2, f_3)$ ont des fréquences différentes.

3. Système de radar selon la revendication 1 ou 2, caractérisé en ce que le commutateur de transfert (23) est un commutateur en ferrite guide d'onde.

4. Système de radar selon la revendication 1 ou 2, caractérisé par une multitude d'unités d'antenne (20-1 à 20-n), chacune avec un commutateur de transfert (83) et une antenne (4), un distributeur (12) pour répartir la puissance venant de l'excitateur (21) entre les unités, et une multitude de combinateurs (13-1 à 13-3) pour combiner des signaux de réception correspondant, aux bornes différentes d'alimentation (41, 42, 43) de l'antenne (4) dans les unités d'antenne.

5. Système de radar selon la revendication 4, caractérisé en ce que les commutateurs de transfert (83) sont des commutateurs à diode PIN.

6. Système de radar selon la revendication 4 ou 5, caractérisé en ce que chaque unité d'antenne (20-1 à 20-n) comprend un déphaseur (81) précédant le commutateur de transfert (83), et des seconds déphaseurs (11-1 à 11-3) précédant les combinateurs de puissance (13-1 à 13-3), et par un contrôleur (14) de balayage de faisceau disposé de manière à commander les premier et second déphaseurs de façon à balayer électroniquement la multitude de faisceaux du réseau des unités d'antenne.

7. Système de radar selon la revendication 4 ou 5, caractérisé par un moyen pour faire tourner le réseau d'unités d'antenne (20-1 à 20-n) afin de balayer mécaniquement la multitude de ses faisceaux.

FIG.1

FIG.2

FIG.3

FIG.4

SELECTED OUTPUT

| PHASE SHIFT | | 231 | 232 | 233 |
|---|---|---|---|---|
| | $\phi_1$ | $-90°$ | $0°$ | $0°$ |
| | $\phi_2$ | $0°$ | $-90°$ | $-90°$ |
| | $\phi_3$ | $0°$ | $-90°$ | $0°$ |
| | $\phi_4$ | $0°$ | $0°$ | $-90°$ |

FIG.5B

FIG.5A

FIG.6

CK

BIAS CONT.

V1    V2    V3

836a

CHOKE

837a    835a

837b

CHOKE    836b

830    832

835b

837c    CHOKE

835c    836c

831

833

FIG. 7A

SELECTED OUTPUT

| | 831 | 832 | 833 |
|---|---|---|---|
| $V_1$ | $+V$ | $-V'$ | $-V'$ |
| $V_2$ | $-V'$ | $+V$ | $-V'$ |
| $V_3$ | $-V'$ | $-V'$ | $+V$ |

BIAS

FIG. 7B

4